# EUROPEAN PATENT SPECIFICATION

(11) **EP 2 275 782 B1**
(45) Date of publication and mention of the grant of the patent: **05.11.2014**
(21) Application number: 09009199.2
(22) Date of filing: 15.07.2009
(51) Int. Cl.: G01D 5/34

(54) **High resolution absolute rotary encoder**
Absoluter Drehgeber mit hoher Auflösung
Encodeur entièrement rotatif haute résolution

(43) Date of publication of application: 19.01.2011
(73) Proprietor: Baader, Thomas, 82291 Mammendorf (DE)
(72) Inventor: Rowe, David, Torrance, CA 90503 (US); Riccio, Filippo, 20090 Vimdrone (MI) (IT); Mariotti, Ivan, 21042 Caronno Pertusella (VA) (IT)

(56) References cited:
- US-A- 4 736 187
- US-A1- 2006 284 061

## Description

### SUMMARY OF THE INVENTION

The invention relates to an absolute optical encoder device that is able to measure its position with high resolution using multiple tracks in combination with a photoelectric image sensor array which allows the evaluation of the two-dimensional image pattern. The encoder allows further for correction of the eccentricity of the codewheel and displacement of the image sensor.

### THE PRIOR ART

According to the prior art, absolute position measurements are obtained with a scale with a plurality of tracks carrying a binary or Gray-code pattern. Conversely, high resolution is usually given by analog sine-cosine signals that can be obtained with diffraction patterns of coherent light sources.

European Patent Application EP-A-557 265, and Japanese Patent Application JP-A-06347292 disclose rotary encoders having codewheels with multiple code sections and linear image sensors. Japanese Patent Application JP-A-07027576 describes a rotary encoder with a linear image sensor which may measure the rotation angle more accurately even when dust is stuck to the linear sensor.

Japanese Patent Application JP2000121391 describes an optical linear scale wherein linear movement is measured by evaluation of moire fringes on a CCD imaging element.

US patent 4,736,187 discloses an optical encoding system for determining the absolute and the incremental positions of a movable member relative to a stationary member. The system comprises an encoding band with timing and incremental encoding tracks, and a data track comprising a series of absolute position tags. A read head that has three optical sensors for the timing track, encoding track, and data track, generates an analog signal which is decoded for determining the incremental and absolute position of the movable member relative to the stationary member.

US patent application 2006/0284061 describes an optical encoder device with a first coded pattern disposed on the first side, and a second coded pattern disposed on the second side, both coded patterns having portions configured to reflect light. Information about motion is obtained by the output signals of a first and as second optical encoder disposed to the first and second side of the pattern medium.

When using a linear optical encoder according to the state of the art as described above, the current of the electrical signals fluctuates between a "dark current" and a "light current". The dark current corresponds to when an opaque part of the track on the scale is positioned between the light source and a photodetector. The light current corresponds to the dark current plus current generated by a photodetector when a transparent section of the track on the codewheel is positioned between the light source and the photodetector. In this way, the modulated light causes the electrical signal to swing continuously from dark current to light current and back, thus generating electrical pulses which are evaluated to determine the position.

In contrast to the rotary encoders of the prior art mentioned above, the encoder according to the present invention provides an image of the specific codewheel pattern on a two-dimensional image sensor matrix. This image as a whole can be processed and converted to positional data, thus resulting in very precise position values, including corrections for eccentricity and misalignment.
The actual size of the CCD or CMOS. chip does not decide about the functionality of the described encoder.
However the encoder must be able to analyze the full width of the code wheel pattern at one or more places along the pattern ring shape for simultaneous Position analysis. For the purpose it is advisable to use CCD or CMOS-arrays in sizes between 100 to 2000 pixel in x-direction and 100 to 2000 pixel in y-direction.
The actual amount of pixels is not critical for the design, rather it is a function of price and calculating power of the decoder hardware and software, be it analysed on board or via a separate PC or other electronic devices commonly used for calculations.
Especially commercially available CCD or CMOS-arrays as used in "Webcams" having VGA-resolution of 640 x 480 pixel or larger are suitable for this invention.

### DESCRIPTION OF DRAWINGS

Fig. 1 is a schematic drawing of the encoder comprising a codewheel (1) comprising sections of radial stripes (3) and mounted on an axis (2), a light emitting device (4), a photoelectric imaging sensor (5) and a computing device (6).
Fig. 2 (2/1 to 2/12) shows various embodiments of the codewheel with different numbers of concentric sections and with or without dividing lines.
Fig. 3 shows the appearance of a codewheel as imaged by the sensor, with markings delimiting the zones corresponding to the different sections of the pattern.
Fig. 4 shows a signal used for determining the radial position of the dividing lines.
Fig. 5 displays a sample of signals obtained from the different zones of the image sensor.
Fig. 6 displays the equivalency of tangential displacement and rotation of the image sensor with respect to the codewheel pattern.
Fig. 7 illustrates a technique for narrowing the estimation of the rotation angle.

### DESCRIPTION OF PREFERRED EMBODIMENTS

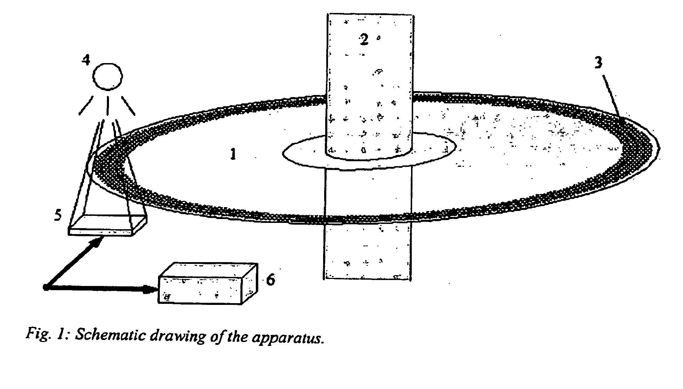

With reference to Fig. 1, a codewheel (1) having a specific patten of radial stripes (3) as described in detail below, in combination with a light source (4) provides an image of said pattern onto an image sensor array (5). Said image can be processed by a computing device (6) executing a software program that is able to compute the angle of the codewheel from the image data, e.g. using an algorithm as described in the following. The angle can be used by the same computing device to perform additional processing, or can be output to another device through an external connection.

Evaluating the image cast onto the image sensor array, also the eccentricity of the codewheel, and displacement of the image sensor array can be corrected.

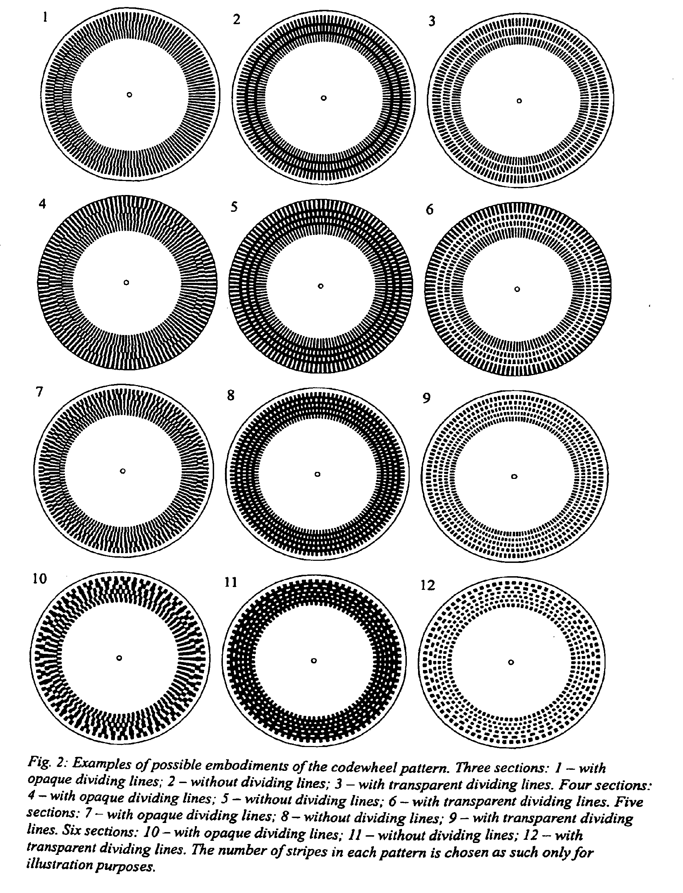

The codewheel (1), of which some examples of various possible embodiments are shown in Fig. 2/1 to 2/12, contains at least three concentric sections. Each section is made of alternating transparent and opaque radial stripes. It is essential for the present invention that at least two of the three or more concentric sections contain the same number of radial stripes, and that the at least one or more remaining concentric sections contain a number of stripes which is different from the number of stripes in the beforementioned at least two concentric sections having the same number of stripes.

The codewheel may contain more than three concentric sections with radial stripes, e.g. four, five, six or more of said concentric sections. Such additional concentric sections preferably contain a different number of radial stripes, thereby increasing the precision and robustness of angle determination.

The codewheel may be made of a transparent polymer or glass carrier disc, onto which a stripe pattern is printed or etched. Alternatively, the codewheel may be made from opaque materials such as metal discs, opaque polymers, metallized glass or polymers or similar, into which slits or openings are cut or etched.

Optionally and preferably, the concentric sections of radial stripes are separated from neighbouring concentric sections by opaque or clear dividing lines. These dividing lines assist to find the boundaries and limits of the individual sections in the image pattern, and thus assist the evaluation of the image with respect to eccentricity and radial displacement of the image sensor. No separations are required if fixed or predetermined boundaries or areas in the image zones are used by the evaluation software and/or eccentricity corrections are not implemented.

Again with reference to Fig. 1, the light emitting device (4) may be selected from bulbs or light emitting diodes (LED). The light emitting device may emit poly- or monochromatic light. It may bum continuously, in particular if low rotational speeds are involved, or if mechanical or electronic shutters are used with the image sensor. In specific embodiments, it may be advantageous that the light emitting device is flashed or triggered for an appropriate amount of time synchronous with the image acquisition by the image sensor, in order to minimize the motion blur at the expected rotation speed. Alternatively, the motion blur may also be controlled using a mechanical or electronic shutter on the image sensor.

The light emitting device is facing the image sensor (5) with the pattern of the codewheel between them. The distance from the image sensor to the codewheel and to the light emitting device is chosen so that a slightly defocused image of the pattern can be acquired with the sensor. Additional optical systems such as focusing lenses, collimators, etc. may be employed between the light source and the image sensor to improve the image on the image sensor. Alternatively the light emitting device can be mounted in the vincinity or on the same mounting holder as the sensor and the light emitted through the codewheel can be directed by a mirror or mirror systems back onto the imaging sensor. Another alternative is mounting the light emitting device in any available position and direct the light onto the imaging sensor using optical systems such as optical fibers.

Any image sensor capable of recording two-dimensional images is suitable in the present invention, for example a matrix of photodetectors. Single photocells or a single linear CCD would not be suitable as image sensors in the present invention since such photodetectors cannot record a two-dimensional pattern but only a linear brightness distribution. Suitable image sensors in the present invention are for example CCD or CMOS arrays. Alternatively, multiple linear photoelectric sensors can be used, provided that each relevant section of the codewheel is imaged by at least one sensor oriented perpendicularly to the radial stripes, and, if dividing lines are implemented, provided that at least one further sensor oriented perpendicularly to the dividing lines is used for measuring the position of the dividing lines.

If using a matrix image sensor, the image sensor is ideally aligned so that the radial stripes are in direction of the sensor's lines, while the opaque or clear dividing lines, if present, are in the direction of the sensor's columns.

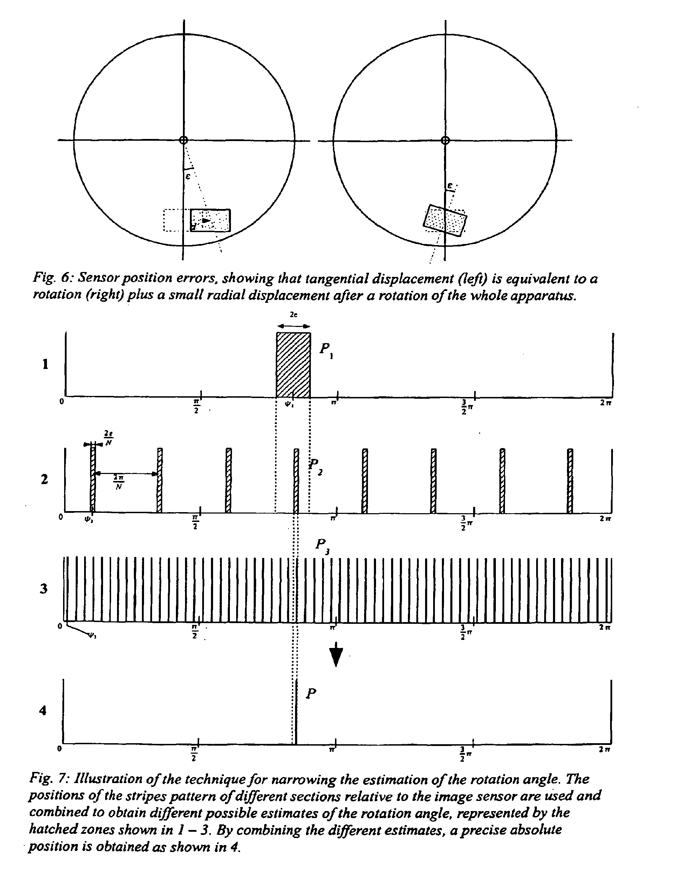

Any error in the sensor positioning that arises during the manufacturing process or later appears as a rotation of the sensor with respect to the codewheel pattern plus a radial displacement, as shown in FIG. 6.

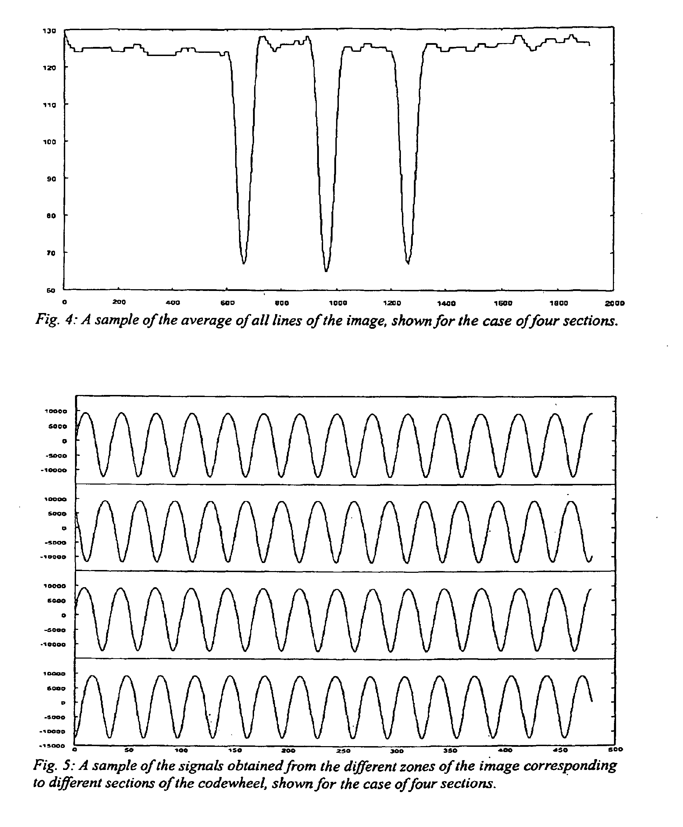

The measurement of the absolute rotation angle of the codewheel is obtained by making measurements on signals such as those shown in FIG. 4 and FIG. 5.

The signal of FIG. 4, used only when dividing lines are implemented, can be obtained by image processing, for example by averaging all the lines of the matrix image sensor, or, if multiple linear photoelectric sensors are used, directly from one or more of the sensor dedicated to this task. This signal is further processed to obtain the position of the dividing lines with respect to the sensor so that the radial displacement of the sensor and eccentricity of the codewheel can be evaluated and corrected. This signal may be used also to further define the position of the zones of the image sensor where the image of the relevant sections of the codewheel is formed.

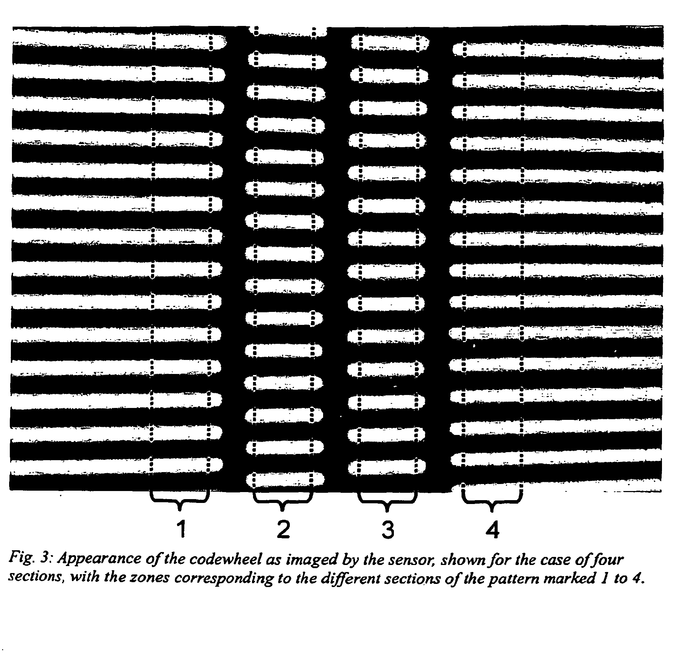

The signals of FIG. 5 are obtained for each section of the codewheel, for example by image processing, averaging all the columns in each relevant zone of the image sensor, or, if multiple linear photoelectric sensors are used, directly from the ones dedicated to this task. These signals are further processed to obtain, for each codewheel section, the position of the stripes pattern with respect to the sensor. These positions create an unique combination depending on the rotation angle of the codewheel, providing absolute angle measurement. In a preferred embodiment, difference between different pairs of these positions are evaluated, and each pair gives a set of possible angle values such as those shown in FIG. 7/1 to 7/3; these possible angle values are then combined in such a way to narrow the possible angle to a small range as shown in FIG. 7/4. Furthermore, the measured positions obtained from the abovementioned sections having the same number of stripes are compared to evaluate the rotation of the sensor with respect to the codewheel pattern, so that the errors in the measured positions corresponding to the other sections can be corrected, effectively correcting any error that can arise from the rotational displacement of the sensor.

If the dividing lines are implemented, the eccentricity of the codewheel pattern is evaluated by measuring the position of the dividing lines at different rotation angles of the codewheel, so that a software correction can be performed.

In order to perform the image processing and data analysis, the image data provided by the image sensor may be output to an external computing device (6) where the pattern is evaluated for rotational state, and optionally also for eccentricity and misalignment. In a preferred embodiment, the computing device is integrated into the encoder, e.g. on an electronic circuit board, and performs the abovementioned tasks.

The computing device processes the acquired image, executing a software program that is able to compute the angle of the codewheel from the image data, using suitable algorithms. This angle can be used by the same computing device to perform additional processing, or can be output to another device or a computer through an external connection.

### Fields of application

- precise positioning, movement and highspeed tracking of astronomical telescopes;
- precise control of industrial production machines / robots and motion control in the automotive industry.

## Claims

1. A rotary optical encoder comprising:
- a light emitting device (4),
- a codewheel (1),
wherein the codewheel comprises at least three concentric sections (3) of alternating radial transparent and opaque stripes,
wherein at least two of the concentric sections contain the same number of radial stripes, and the number of radial stripes in at least one further concentric section is different from the number of radial stripes in the beforementioned two concentric sections;
wherein the concentric sections are optionally separated by opaque or clear dividing lines;
- a photoelectric imaging sensor matrix (5),
**characterized in that**
the photoelectric imaging sensor matrix (5) is capable of recognizing two-dimensional patterns, and is aligned in a way that the radial stripes are essentially oriented in direction of the sensor's lines, and the dividing lines, if any, are in direction of the sensor's columns; or alternatively, aligned in a way that the radial stripes are in direction of the sensor's columns, while the opaque or clear dividing lines, if present, are in the direction of the sensor's lines.

2. The rotary encoder according to claim 1 further comprising a computing device for image processing.

3. The rotary encoder according to claim 2, wherein the computing device is integrated into the circuit board of the sensor electronics.

4. The rotary encoder according to claim 2, wherein the computing device is not integrated into the circuit board of the sensor electronics.

5. The rotary encoder according to any previous claim wherein the photoelectric image sensor is a CCD array or a CMOS array.

6. The rotary encoder according to any previous claim wherein the photoelectric image sensor is replaced by multiple linear photoelectric sensors.

7. The rotary encoder according to any previous claim comprising an additional optical system for image acquisition.

8. The rotary encoder according to any previous claim wherein the concentric sections are separated by opaque or clear dividing lines.

9. The rotary encoder according to any previous claim comprising a mechanical or
electronic shutter, or means for flashing or strobeing the light emitting device for controlling image motion blur.

10. The rotary encoder according to claims 2-9, wherein the computing device comprises means for correcting the eccentricity of the codewheel and/or the displacement of the image sensor.

11. The rotary encoder according to claim 10, wherein eccentricity and/or sensor displacement correction is implemented by correcting the measured values using a previous estimation of the rotation angle, obtained either from a previous image or from a previous computation on the same image without accounting for the eccentricity or
displacement correction itself.

12. The rotary encoder according to any previous claim, wherein an imperfect realization of the pattern on the codewheel is corrected by means of a mapping from the measured rotation angle to another angle, previously measured with another method, and stored in a non-volatile memory.

13. A method of measuring the rotational angle of a rotating device, comprising the following steps:
- providing on a two-dimensional image sensor array an image of an encoder wheel which comprises at least three concentric sections of alternating radial transparent and opaque stripes, wherein at least two of the concentric sections contain the same number of radial stripes, and the number of radial stripes in at least one further concentric section is different from the number of radial stripes in the beforementioned two concentric sections;
- using the zones in the image of the concentric sections having the same number of radial stripes as reference marks;
- calculating the rotational angle from the pattern in the zones of the image of the further concentric sections having a different number of radial stripes in relation to the beforementioned reference marks.

14. The method of claim 13, further comprising the calculation and correction of eccentricity of the codewheel and displacement of the image sensor from the image pattern.

15. A telescope mount comprising the encoder according to claims 1-12, wherein the encodersdescribed herein may be used to control the axial rotational position of the Right Ascension or Azimuth axis and/or that of the Declination or Elevation axis, and wherein preferably both axes are being equipped with this encoder and are electronically controlled simultaneously.

16. Use of an encoder according to claims 1-12 for controlling the position of a telescope mount.

## Patentansprüche

1. Ein rotierender optischer Encoder einschließlich
- eines Licht emittierenden Bauelements (4),
- einer Kodierscheibe (codewheel) (1),
worin die Kodierscheibe mindestens drei konzentrische Sektionen mit wechselweise transparenten und lichtundurchlässigen radialen Streifen enthält,
worin mindestens zwei der konzentrischen Sektionen (3) die gleiche Anzahl radialer Streifen enthalten, und sich die Anzahl der radialen Streifen in mindestens einer weiteren konzentrischen Sektion von der Anzahl der radialen Streifen in den vorgenannten zwei konzentrischen Sektionen unterscheidet;
worin die konzentrischen Sektionen optional durch undurchsichtige oder transparente Trennungslinien voneinander getrennt sind,
- eines photoelektrischen Bildsensors (5),
**dadurch gekennzeichnet, dass**
der photoelektrische Bildsensor(5) in der Lage ist, zweidimensionale Muster zu erkennen und in einer Weise ausgerichtet ist, dass die radialen Streifen in erforderlicher Weise entlang der Sensorreihen orientiert sind und die Trennungslinien, sofern vorhanden, in Richtung der Sensorspalten ausgerichtet sind; oder alternativ in der Weise ausgerichtet ist, dass die radialen Streifen in Richtung der Sensorspalten orientiert sind, während die undurchsichtigen oder transparenten Trennungslinien, sofern vorhanden, in Richtung der Sensorreihen ausgerichtet sind.

2. Der rotierende Encoder gemäß Anspruch 1, der zusätzlich eine Berechnungseinheit zur Bildverarbeitung umfasst.

3. Der rotierende Encoder gemäß Anspruch 2, worin die Berechnungseinheit auf der Platine der Sensorelektronik integriert ist.

4. Der rotierende Encoder gemäß Anspruch 2, worin die Berechnungseinheit nicht auf der Platine der Sensorsorelektronik integriert ist.

5. Der rotierende Encoder gemäß einem der vorigen Ansprüche, worin der photoelektrische Bildsensor eine CCD-Anordnung oder eine CMOS-Anordnung ist.

6. Der rotierende Encoder gemäß einem der vorigen Ansprüche, worin der photoelektrische Bildsensor durch mehrere, linear angeordnete photoelektrische Bildsensoren ersetzt wird.

7. Der rotierende Encoder gemäß einem der vorigen Ansprüche, einschließlich eines zusätzlichen optischen Systems zur Bilderfassung.

8. Der rotierende Encoder gemäß einem der vorigen Ansprüche, worin die konzentrischen Sektionen durch undurchsichtige oder transparente Trennungslinien getrennt sind.

9. Der rotierende Encoder gemäß einem der vorigen Ansprüche, einschließlich eines mechanischen oder elektronischen Verschlusses, sowie Mittel zum blitzartigen oder stroboskopischen Betrieb des Licht emittierenden Bauelements zur Kontrolle von Bewegungsunschärfe.

10. Der rotierende Encoder gemäß Ansprüchen 2-9, worin die Berechnungseinheit Mittel zur Korrektur einer Exzentrizität des Abtastrades und/oder des Versatzes des Bildsensors einschließt.

11. Der rotierende Encoder gemäß Anspruch 10, worin die Korrektur der Exzentrizität und/oder des Sensorversatzes durch Korrektur der gemessenen Werte unter Verwendung einer vorherigen Schätzung des Drehwinkels durchgeführt wird. Die Werte stammen hierbei entweder von einem vorherigen Bild oder von einer vorherigen Berechnung des selben Bildes ohne Berücksichtigung der genannten Effekte wie Exzentrizität des Encoders oder Versatz des Bildsensors.

12. Der rotierende Encoder gemäß einem der vorherigen Ansprüche, worin eine unvollkommene Umsetzung der Erkennung des Musters des Abtastrades durch Mapping des Vorgangs der Messung von einem Drehwinkel zu einem anderen Drehwinkel, der vorher mit einer anderen Methode gemessen wurde, korrigiert und in einem nichtflüchtigen Speicher gespeichert wird.

13. Eine Methode zur Messung des Drehwinkels einer rotierenden Vorrichtung, die folgende Schritte einschließt:
- Bereitstellung eines Bildes des Abtastrades auf einer zweidimensionalen Bildsensor-Anordnung, der mindestens drei konzentrische Sektionen abwechselnd transparenter und undurchsichtiger radialer Streifen einschließt, worin mindestens zwei der konzentrischen Sektionen die gleiche Anzahl radialer Streifen enthalten und die Anzahl der radialen Streifen in mindestens einer weiteren Sektion sich von der Anzahl der radialen Streifen in den vorgenannten zwei konzentrischen Sektionen unterscheidet.
- Verwendung von Bereichen des Bildes der konzentrischen Sektionen, die die gleiche Anzahl radialer Streifen aufweisen, als Referenzmarkierungen.
- Berechnung des Drehwinkels aus dem Muster der Bereiche des Bildes der weiteren konzentrischen Sektionen, die eine unterschiedliche Anzahl radialer Streifen in Bezug auf die vorgenannten Referenzmarkierungen aufweisen.

14. Die Methode gemäß Anspruch 13, des Weiteren einschließlich der Berechnung und Korrektur der Exzentrizität des Abtastrades und des Versatzes des Bildsensors aus dem Bildmuster.

15. Eine Teleskopmontierung einschließlich des Encoders gemäß Ansprüchen 1-12, worin die hier beschriebenen Encoder zur Kontrolle der Position der axialen Rotation der Rektaszensionsachse (Stundenachse) und/oder der Deklinationsachse, bzw. an einer Azimutachse und/oder Höhenachse, bevorzugt jedoch an jeweils beiden Achsen eingesetzt und gleichzeitig elektronisch angesteuert werden können.

16. Verwendung eines Encoders gemäß Ansprüchen 1-12 zur Kontrolle der Position einer Teleskopmontierung.

## Revendications

1. Un encodeur incrémental optique rotatif comprenant :
- Un élément émetteur de lumière (4)
- Une roue encodée (1)
Où la roue encodée comprend au moins trois sections concentriques (3) de rayes radiales alternativement transparentes et opaques.
Où au moins deux sections concentriques contiennent le même nombre de rayes radiales, et que le nombre de rayes radial dans au moins une section concentrique supplémentaire soit différent du nombre de rayes des sections mentionnées précédemment ;
Où les sections concentriques sont optionnellement séparées par de claires lignes opaques.
- un senseur d'imagephotoélectriquematriciel (5)
**caractérisé par**
le senseur d'imagephotoélectrique matriciel (5) est capable de reconnaitre des modèles bidimensionnel, et est aligné de manière à ce que les raye radiales soient essentiellement orientées dans les lignes du senseur, et les lignes de divisions, pour autant qu'il y en ait, soient orientées en direction des colonnes du senseur, tandis que les ligne de divisions opaque ou transparente, pour autant qu'il y en ait, soient alignées dans la direction des lignes du senseur.

2. L'encodeur rotatif selon revendication 1 comprend de plus un dispositif de calcul pour le traitement d'image.

3. L'encodeur rotatif selon revendication 2, où le dispositif de calcul est intégré dans le circuit intégré du senseur électronique.

4. L'encodeur rotatif selon revendication 2, où le dispositif de calcul n'est pas intégré dans le circuit intégré du circuit intégré du senseur électronique.

5. L'encodeur rotatif selon toutes les revendications précédentes ou le senseur d'image photoélectrique est une matrice CCD ou une matrice CMOS.

6. L'encodeur rotatif selon toutes les revendications précédentes ou le senseur d'image photoélectriqueest remplacé par un senseur photoélectrique multi linéaire.

7. L'encodeur rotatif selon toutes les revendications précédentes incluant un système additionnel d'acquisition d'image.

8. L'encodeur rotatif selon toutes les revendications précédentes où les sections concentriques sont séparées par de claires lignes opaquesde séparation.

9. L'encodeur rotatif selon toutes les revendications précédentes incluant un obturateur mécanique ou électronique, ou système permettant d'émettre de la lumière sous forme de flash ou stroboscopique permettant contrôler le déplacement d'image floue.

10. L'encodeur rotatif selon les revendications 2-9, où le dispositif de calcul permet de contrôler les excentricités de la roue encodée et/ou le déplacement du senseur d'image.

11. L'encodeur rotatif selon la revendications 10, où la correction de l'excentricités et/ou le déplacement du senseur d'image est réalisé par la correction des valeurs mesuréesutilisant une estimation précédente de l'angle de rotation, obtenu soit par une image précédente, ou d'un calcul fait précédemment sur une image ne tenant pas compte de l'excentricité ou correction de déplacement proprement dit.

12. L'encodeur rotatif selon toutes les revendications précédentes, où une réalisation imparfaite du modèle de la roue codée est corrigée au moyen d'une cartographie de la mesure d'un angle de rotation à un autre angle, mesuré précédemment avec un autre méthode de mesure, et sauvé dans une mémoire non volatile.

13. Une méthode de mesure de l'angle de rotation d'un système tournant, comprenant les étapes suivantes :
- fournir une image bidimensionnelsur une matrice d'un senseur d'une image d'une roue d'encodeur comprenant au moins trois sections concentriques alternant des rayes radiales transparentes et opaquesoù au moins deux sections concentriques contiennent le même nombre de rayes radiales, et que le nombre de rayes radial dans au moins une section concentrique supplémentaire soit différent du nombre de rayes des deux sections mentionnées précédemment ;
- Utiliser comme référence la zone dans l'image des section ayant le même nombre de rayes radiales ;
- Calculer l'angle de rotation du modèle dans la zone de l'image de la section concentrique suivante ayant un nombre de rayes radiales différentes en relation avec les marques de référence précédentes.

14. La méthode de la revendication 13, de plus, comprend le calcul et correction de l'excentricité de la roue encodée et le déplacement du senseur d'image par rapport au modèle d'image.

15. Une monture de télescope comprenant l'encodeur selon les revendications 1-12, où les encodeurs décrit ici peuvent être utilisés pour contrôler la rotation axial de l'ascension droit ou d'azimut et/ou l'axe de déclinaison ou d'élévation, et où, de préférence, les deux axes sont équipés avec cet encodeur et contrôlés électroniquement simultanément.

16. Utilisation d'un encodeur selon les revendications 1-12 pour contrôler la position d'une monture de télescope.
